# EUROPEAN PATENT SPECIFICATION

(11) **EP 1 759 938 B1**
(45) Date of publication and mention of the grant of the patent: **15.10.2008**
(21) Application number: 06016335.9
(22) Date of filing: 04.08.2006
(51) Int. Cl.: B60R 22/34, B60R 22/46

(54) **Seat belt apparatus and vehicle**
Sicherheitsgurtanordnung fur ein Fahrzeug
Dispositif de ceinture de sécurité pour véhicule

(30) Priority: 29.08.2005 JP 2005247643
(43) Date of publication of application: 07.03.2007
(73) Proprietor: TAKATA CORPORATION, Minato-ku, Tokyo 106-8510 (JP)
(72) Inventor: Tanaka, Koji c/o Takata Corporation, Tokyo 106-8510 (JP); Inuzuka, Koji c/o Takata Corporation, Tokyo 106-8510 (JP)
(74) Representative: Vossius & Partner

(56) References cited:
- WO-A-93/11975
- US-A- 4 896 844
- US-A1- 2004 036 345
- US-A1- 2005 073 187

## Description

The present invention relates to a technology for developing a seat belt apparatus to be installed in a vehicle.

Conventionally, seat belt apparatuses of various structures for restraining a vehicle occupant in a vehicle such as an automobile by a seat belt are known.

US 2005/0073187 A1 relates to an occupant restraint system including first and second lap belts for collectively extending across a lap of the occupant. First and second shoulder belts extend over the shoulders of the occupant. A buckle assembly interconnects the lap belts and the shoulder belts. The occupant restraint system also includes first and second buckle-lowering belts attached to the buckle assembly for creating a downwardly acting biasing force on the buckle assembly so as to move the buckle assembly downwardly relative to the seat and towards the lap of the occupant.

For example, JP-A-2005-170123 (Patent Document 1) listed below discloses a seat belt apparatus having a seat belt retractor of such a structure that a spool (winding shaft) is rotated by an electric motor so as to wind up a seat belt.

By the way, in the seat belt apparatus of this kind, a seat belt storing action of winding up a seat belt (webbing) is taken for the purpose of preventing the seat belt from being kept in the state unwound from the spool after canceling the latching of a tongue to a buckle, i.e. buckle release. As a structure for taking this seat belt storing action, a structure of winding up the seat belt using an electric motor as described in the aforementioned Patent Document 1 or a return spring may be employed. For optimizing the seat belt storing action, it is desired to pursue speed-up of the seat belt winding, reduction in load for the seat belt winding, and facilitation of the seat belt winding while taking the motion of the seat belt including a tongue into consideration.
Therefore, it is an object of the present invention to provide a technology effective for optimizing the seat belt storing action in a seat belt apparatus to be installed in a vehicle.

For achieving the object, the present invention is made. The present invention can be typically adapted to a seat belt apparatus to be installed in an automobile. In addition, the present invention can be adapted to a technology for developing a seat belt apparatus to be installed in a vehicle other than the automobile, such as aircraft, boat, train, and bus.

The first aspect of the present invention for achieving the aforementioned object is a seat belt apparatus claimed in claim 1.
The seat belt apparatus claimed in claim 1 is a device to be installed in a vehicle and comprises at least a seat belt, a first winding-up means, a second winding-up means, a deflection fitting, a tongue, and a buckle.

The seat belt of the present invention is a long belt to be worn by a vehicle occupant seated in a vehicle seat and is sometimes called "webbing". Typically, the vehicle occupant seated in the vehicle seat is restrained by the seat belt when restraint is required such as a vehicle collision.

The first winding-up means of the present invention is structured as a means for winding up the seat belt from one end side thereof. On the other hand, the second winding-up means is structured as a means which is disposed in a region around occupant's door-side hip to wind up the seat belt from the other end side thereof. The "region around occupant's door-side hip" is defined as a region in a vehicle corresponding to the door-side hip of the vehicle occupant and the periphery thereof. The first winding-up means and the second winding-up means each comprise a spool for winding up the seat belt and a power source for rotating the spool in the winding direction. As the power source, one or more of a group consisting of a return spring, an electric motor, and a pyrotechnic drive unit may be employed.

The deflection fitting of this invention has a function of holding the seat belt to a region around occupant's shoulder. The "region around occupant's shoulder" is defined as a region in a vehicle corresponding to the shoulder of the vehicle occupant and the periphery thereof. The tongue of this invention is attached to the seat belt and is latched to the buckle of this invention, which is disposed in the region around occupant's cabin-side hip, when the seat belt is worn. The "region around occupant's cabin-side hip" is defined as a region in a vehicle corresponding to the cabin-side hip of a vehicle occupant and the periphery thereof.

In this invention, the seat belt extends from the first winding-up means through the deflection fitting and further extends to the second winding-up means through the tongue and the seat belt forms a shoulder belt portion on the first winding-up means side before the tongue and a lap belt portion on the second winding-up means side after the tongue when the tongue is latched to the buckle so that the seat belt is worn. The shoulder belt portion is structured as a part of the seat belt extending across the chest and the shoulder of the vehicle occupant. The lap belt portion is structured as another part of the seat belt extending across the abdomen and the hip of the vehicle occupant.

In this invention, the first winding-up means and the second winding-up means are adapted to operate such that after canceling the latching of the tongue relative to the buckle, i.e. buckle release, the lap belt portion of the seat belt is first wound up and the shoulder belt portion of the seat belt is then wound up.

According to the arrangement of the seat belt apparatus as claimed in claim 1, the improvement of the seat belt storing action is achieved.
Specifically, by first winding up the lap belt portion just after buckle release, the tongue held in the region around occupant's cabin-side hip via the buckle moves substantially horizontally toward the region around occupant's door-side hip according to the winding-up of the lap belt portion so that the tongue moves to a position not to disturb the vehicle occupant when getting off the vehicle. The moving path of the tongue is a path across the abdomen or the hip of the vehicle occupant which is shorter than the path of the tongue in case of moving to an upper part of the vehicle, thereby shortening the time the tongue takes to move to the position not to disturb the vehicle occupant when getting off the vehicle. The moving path lies below the normal eye level of the vehicle occupant and far away from the range of view of the vehicle occupant, thereby preventing the vehicle occupant from feeling uncomfortable due to the movement of the tongue. Because the tongue moves substantially horizontally during winding up the lap belt portion, the driving force of the second winding-up means can be reduced as compared to the case of winding-up so as to lift the tongue, thereby enabling reduction in size, weight, and cost of the second winding-up means. By the arrangement of mainly storing the lap belt portion, the lap belt portion including the tongue is prevented from disturbing the vehicle occupant when getting off the vehicle and is also prevented from being caught by the door. Therefore, it is no longer necessary to rapidly wind up the shoulder belt portion after winding up the lap belt portion. The winding speed by the first winding-up means can be reduced, thereby preventing discordant operating sound and noise generation due to the first winding-up means.

The second aspect of the present invention for achieving the aforementioned object is a seat belt apparatus as claimed in claim 2.
In the seat belt apparatus claimed in claim 2, the first winding-up means in the arrangement as claimed in claim 1 comprises a first return spring and an electric motor for applying winding-up force to a first spool for winding up the seat belt. The second winding-up means comprises a second return spring for applying winding-up force to a second spool for winding up the seat belt. The winding-up force applied to the seat belt by the second return spring is set to be larger than the winding-up force by the first return spring and to be smaller than the winding-up force as a total of the winding-up force by the first return spring and the winding-up force by the electric motor when driven.

In the arrangement as mentioned above, the lap belt portion is wound up onto the second spool of said second winding-up means by controlling the electric motor of the first winding-up means to be not driven. That is, in the state the electric motor is not driven, the winding-up force applied to the seat belt by the second return spring overcomes the winding-up force by the first return spring so that the lap belt portion is wound up onto the second spool.
On the other hand, the shoulder belt portion is wound up onto the first spool of said first winding-up means by controlling the electric motor of the first winding-up means to be driven. That is, in the state the electric motor is driven, the winding-up force as a total of the winding-up force by the first return spring and the winding-up force by the electric motor when driven overcomes the winding-up force by the second return spring so that the shoulder belt portion is wound up onto the first spool.

According to the aforementioned arrangement of the seat belt apparatus as claimed in claim 2, because the seat belt winding-up force by the first return spring involving the winding-up of the shoulder belt portion is set to be smaller than the seat belt winding-up force by the second return spring involving the winding-up of the lap belt portion, the workload of pulling the seat belt from the first spool is light, facilitating the operation for wearing the seat belt. In addition, uncomfortable feeling of the vehicle occupant due to load applied via the shoulder belt portion when the vehicle occupant wears the seat belt can be reduced.

The third aspect of the present invention for achieving the aforementioned object is a seat belt apparatus claimed in claim 3.
In the seat belt apparatus claimed in claim 3, the first winding-up means as claimed in claim 1 comprises a first return spring for applying winding-up force to a first spool for winding up the seat belt. On the other hand, the second winding-up means comprises a second return spring and an electric motor for applying winding-up force to a second spool for winding up the seat belt. In addition, the winding-up force applied to the seat belt by the first return spring is set to be larger than the winding-up force by the second return spring and to be smaller than the winding-up force as a total of the winding-up force by the second return spring and the winding-up force by the electric motor when driven.

With the arrangement as mentioned above, the lap belt portion is wound up onto the second spool of the second winding-up means by controlling said electric motor of said second winding-up means to be driven. That is, when the electric motor is driven, the winding-up force as a total of the winding-up force by the second return spring and the winding-up force by the electric motor overcomes the winding-up force by the first spring force so that the lap belt portion is wound onto the second spool.
On the other hand, the shoulder belt portion is wound up onto the first spool of the first winding-up means by controlling the electric motor of the second winding-up means to be not driven. That is, when the electric motor is not driven, the winding-up force applied onto the seat belt via the first return spring overcomes the winding-up force by the second return spring so that the shoulder belt portion is wound onto the first spool.

According to the aforementioned arrangement of the seat belt apparatus as claimed in claim 3, because the electric motor is used as a power source for the second spool of the second winding-up means and the electric motor is driven only within a relatively short period of time just after the buckle release, thereby reducing the time of discordant motor operating sound and noise generation due to the electric motor.

The fourth aspect of the present invention for achieving the aforementioned object is a seat belt apparatus claimed in claim 4.
In the seat belt apparatus claimed in claim 4, the first winding-up means as described in claim 1 comprises an electric motor for applying winding-up force to a first spool for winding up the seat belt. On the other hand, the second winding-up means comprises a return spring for applying winding-up force to a second spool for winding up the seat belt. In addition, the winding-up force applied to the seat belt by the return spring is set to be larger than the winding-up force by the electric motor when not driven and to be smaller than the winding-up force by the electric motor when driven.

With the arrangement as mentioned above, the lap belt portion is wound up onto the second spool of the second winding-up means by controlling the electric motor of the first winding-up means to be not driven. That is, when the electric motor is not driven, the lap belt portion is wound onto the second spool with the winding-up force applied to the seat belt by the return spring of the second winding-up means.
On the other hand, the shoulder belt portion is wound up onto the first spool of the first winding-up means by controlling the electric motor of the first winding-up means to be driven. That is, when the electric motor is driven, the winding-up force by the electric motor overcomes the winding-up force by the return spring of the second winding-up means so that the shoulder belt portion is wound onto the first spool.

According to the aforementioned arrangement of the seat belt apparatus as claimed in claim 4, no return spring is required in the first winding-up means, thereby achieving the simplification, miniaturization, reduction in weight and reduction in cost of the first winding-up means.

The fifth aspect of the present invention for achieving the aforementioned object is a vehicle claimed in claim 5.
The vehicle as claimed in claim 5 is a vehicle comprising at least a running system including an engine, an electrical system, a drive control device, and a seat belt apparatus. The running system including an engine is a system relating to driving of the vehicle by the engine. The electrical system is a system relating to electrical parts used in the vehicle. The drive control device is a device having a function of conducting the drive control of the running system and the electrical system. The seat belt apparatus is structured as an apparatus for restraining a vehicle occupant in the event of a vehicle collision. In the present invention, the seat belt apparatus is a seat belt apparatus as claimed in any one of claims 1 through claim 4.
According to the arrangement as mentioned above, a vehicle with a seat belt apparatus is provided in which the optimization of the seat belt storing action is achieved.

As described in the above, the present invention relates to a seat belt apparatus to be installed in a vehicle and enables the optimization of the seat belt storing action by adapting the seat belt apparatus to operate such that after canceling the latching of a tongue relative to a buckle, i.e. buckle release, a lap belt portion as a part of a seat belt is first wound up and a shoulder belt portion as another part of the seat belt is then wound up.

Hereinafter, embodiments of the present invention will be described in detail with reference to drawings.
Fig. 1 is an illustration showing the entire structure of a seat belt apparatus 100 as an embodiment of "the seat belt apparatus" according to the present invention;
Fig. 2 is an illustration showing the schematic structure of a first retractor 1 and a second retractor 21 in the seat belt apparatus 100 shown in Fig. 1;
Fig. 3 is a flow chart for the "belt winding and storing control" in the seat belt apparatus 100 of the embodiment;
Fig. 4 is a graph of changes with time in seat belt winding-up force in the "belt winding and storing control" in the seat belt apparatus 100 of the embodiment;
Fig. 5 is an illustration showing the seat belt apparatus 100 in a state of a first control mode for a seat belt 3 thereof according to the embodiment;
Fig. 6 is an illustration showing the seat belt apparatus 100 in a state of a second control mode for the seat belt 3 thereof according to the embodiment;
Fig. 7 is an illustration showing the seat belt apparatus 100 in a state that the belt winding and storing control for the seat belt 3 is terminated according to the embodiment;
Fig. 8 is an illustration showing the schematic structure of a first retractor 1 and a second retractor 21 in the seat belt apparatus 200 of a second embodiment;
Fig. 9 is a flow chart for the "belt winding and storing control" in the seat belt apparatus 200 of the second embodiment;
Fig. 10 is a graph of changes with time in seat belt winding-up force in the "belt winding and storing control" in the seat belt apparatus 200 of the second embodiment;
Fig. 11 is an illustration showing the schematic structure of a first retractor 1 and a second retractor 21 in the seat belt apparatus 300 of a third embodiment; and
Fig. 12 is an illustration showing the schematic structure of a first retractor 1 and a second retractor 21 in the seat belt apparatus 400 of a fourth embodiment.

### First Embodiment

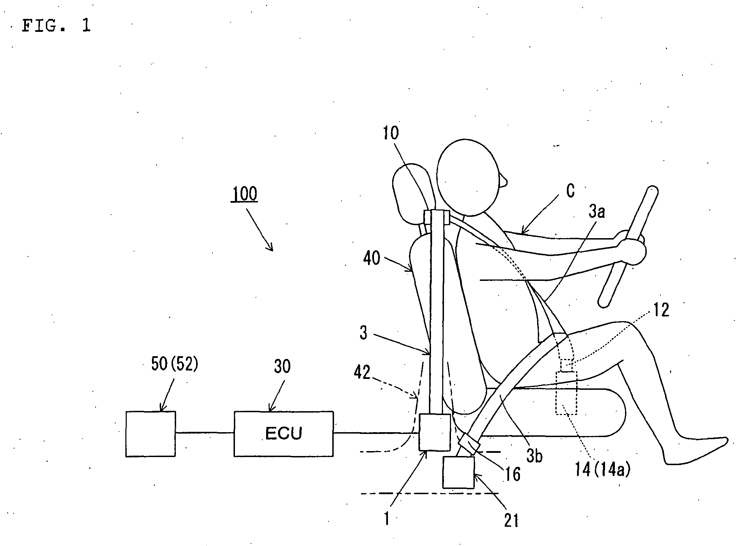

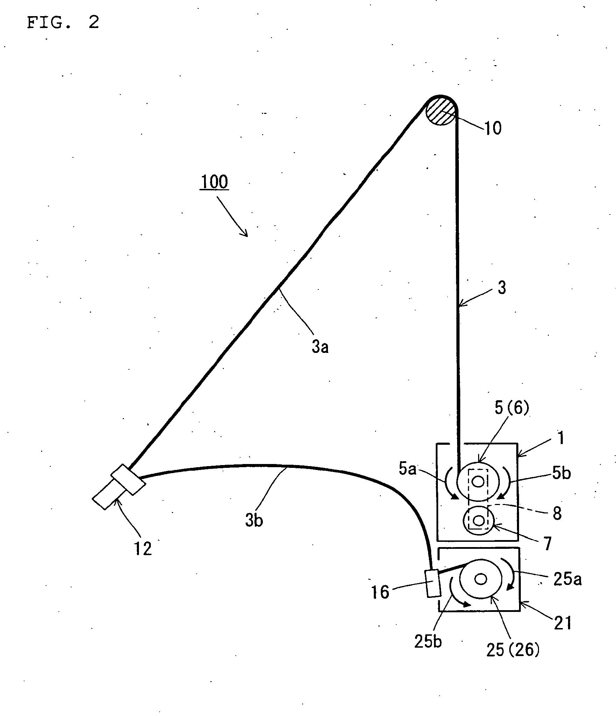

First, description will be made as regard to a seat belt apparatus of an embodiment of the present invention with reference to Fig. 1 and Fig 2.
As shown in Fig. 1, the seat belt apparatus 100 of this embodiment is a seat belt apparatus for a vehicle to be installed in an automotive vehicle as "a vehicle" of the present invention and mainly comprises a first retractor 1, a seat belt 3, a deflection fitting 10, a tongue 12, a buckle 14, a webbing guide 16, a second retractor 21 and an ECU 30. In the embodiment shown in Fig. 1, the first retractor 1 and the second retractor 21 are disposed in an accommodation space within a B pillar 42 of the vehicle at a region around occupant's door-side hip. The "region around occupant's door-side hip" is defined as a region in a vehicle corresponding to the door-side hip of a vehicle occupant C and the periphery thereof. The first retractor 1 may be disposed in an accommodation space in the B pillar 42 at a region around occupant's shoulder or an accommodation space in a vehicle seat, if required.

In addition, an input element 50 is installed in the vehicle to detect and to input various information to the ECU 30. The information to be detected includes information about collision prediction or collision occurrence of the vehicle, information about the driving state of the vehicle, information about the sitting position and the body size of a vehicle occupant seated in a seat, information about traffic conditions around the vehicle, information about weather condition and about time zone, and the like. The detected information of the input element 50 is transmitted to the ECU 30 anytime or at predetermined intervals and is used for the operation control of a running system including an engine, an electrical system, and/or the seat belt apparatus 100 and the like. Therefore, the ECU 30 corresponds to "a vehicle control device for controlling the actuation of a running system including an engine and an electrical system" of the present invention.

Particularly, the input element 50 of this embodiment includes a collision information detection sensor 52 for detecting information about a vehicle collision such as a prediction of a vehicle collision and an occurrence of actual vehicle collision. The collision information detection sensor 52 is a sensor capable of detecting (measuring) information (signal) about distance, speed, and acceleration of a collision object (another vehicle, an obstacle, a pedestrian, or the like) relative to the subject vehicle and also detecting (measuring) accelerations in three-axial (X-axis, Y-axis, and Z-axis) directions acting on the subject vehicle. The collision information detection sensor 52 may comprises a single detection sensor or a combination of plural single detection sensors. Specifically, millimeter wave radar, laser radar, acceleration sensor, camera sensor and the like may be used as the collision information detection sensor 52.

The seat belt 3 is a long belt (webbing) to be used for restraining the vehicle occupant C (sometimes referred to as "driver") seated in a vehicle seat 40 as a driver seat. The seat belt 3 corresponds to the "seat belt" of the present invention. In the state that the seat belt is worn as shown in Fig. 1, the seat belt 3 is withdrawn from the first retractor 1 fixed relative to the vehicle, extends through the deflection fitting 10 provided in a region around the shoulder of the vehicle occupant C, further extends through the tongue 12 and the webbing guide 16, and is connected to the second retractor 21. The seat belt 3 includes respective portions. That is, a shoulder belt portion 3a is formed on the first retractor 1 side (the deflection fitting 10 side) before the tongue 12 to extend across the chest and the shoulder of the vehicle occupant 10 and a lap belt portion 3b is formed on the second retractor 21 side after the tongue 12 to extend across the abdomen and the hip of the vehicle occupant C. The shoulder belt portion 3a corresponds to "a shoulder belt portion" of the present invention and the lap belt portion 3b corresponds to "a lap belt portion" of the present invention.

The deflection fitting 10 has a function of holding the seat belt 3 to the area about the shoulder of the occupant C and guiding the seat belt 3. The deflection fitting 10 corresponds to "a deflection fitting" of the present invention. The "region around occupant's shoulder" is defined as a region in a vehicle corresponding to the shoulder of the vehicle occupant and the periphery thereof. By inserting (latching) the tongue 12 to the buckle 14 fixed to a region around occupant's cabin-side hip of the vehicle body, the seat belt 3 becomes into the state worn by the vehicle occupant C. The "region around occupant's cabin-side hip" is defined as a region in the vehicle corresponding to the cabin-side hip of the vehicle occupant C and the periphery of the region. The region around occupant's cabin-side hip is located on the opposite side of the vehicle occupant C from the region around occupant's door-side hip where the first retractor 1 and the second retractor 21 are disposed. On the other hand, by canceling the latching of the tongue 12 to the buckle 14, the seat belt apparatus becomes into the unbuckled state. The tongue 12 corresponds to "a tongue" of the present invention and the buckle 14 to which the tongue 12 can be latched corresponds to "a buckle to which the tongue can be latched" of the present invention.

The buckle 14 has a built-in buckle switch 14a. The buckle switch 14a detects that the tongue 12 is inserted into the buckle 14 so as to connect the seat belt to the buckle (actually, detects that the seat belt becomes into the worn state). The information detected by the buckle switch 14a is transmitted to the ECU 30 which determines whether or not the seat belt 3 is in the worn state.

The ECU 30 has a function of conducting the control of the first retractor 1 and other operational mechanisms based on the input signals from the input element 50 and comprises a CPU (Central processing unit), an input/output unit, a storage unit, a peripheral unit, and the like. Particularly in this embodiment, the ECU 30 controls the motor 7, as will be described later, of the first retractor 1. Specifically, the ECU 30 controls the amount of current supplied to an electromagnetic coil of the motor 7 and the direction of the current supply so as to vary the rotational speed, the rotational direction, the rotational period of time, and the rotational torque (output) of a shaft of the motor 7. The ECU 30 is structured as a means for controlling the driving of the motor 7 and controlling a power transmission mechanism 8, as will be described later, to switch between the state where the power of the motor 7 is transmitted to a first spool 5 and the state where the power is not transmitted to the first spool 5. Further, the ECU 30 is also provided with a function of detecting (measuring) the current value of the motor 7 in operation.
The ECU 30 may be exclusive to the first retractor 1 or used not only for the first retractor 1 but also for other control means for controlling driving system and/or electric system of the vehicle.

As shown in Fig. 2, the first retractor 1 is structured as a means for winding up the seat belt 3 from one end side thereof and has a retractor housing. The first retractor 1 comprises at least the first spool 5, a first return spring 6, the motor 7, and the power transmission mechanism 8 within the retractor housing. The first retractor 1 corresponds to "a first winding-up means" of the present invention.

The first spool 5 is formed in a columnar or cylindrical shape of which outer periphery (seat belt contact face) functions as the wind-up surface on which the seat belt 3 is wound. The first spool 5 is allowed to rotate in the seat belt winding direction 5a and the seat belt unwinding direction 5b. The first spool 5 corresponds to "a first spool" of the present invention. The first return spring 6 is structured as a member for applying winding-up force to the first spool 5 for winding up the seat belt 3. The first return spring 6 corresponds to "a first return spring" of the present invention. The motor 7 is structured as an electric motor for applying winding-up force to the first spool 5 similarly to the first return spring 6. The motor 7 corresponds to "an electric motor" of the present invention. As mentioned above, in the first retractor 1, the first return spring 6 and the motor 7 are power sources for winding up the seat belt 3 onto the first spool 5.

The power transmission mechanism 8 is arranged between the first spool 5 and the motor 7. The power transmission mechanism 8 is structured as a mechanism capable of taking a connected state where the first spool 5 and the motor 7 are connected (power transmission operation mode) and a disconnected state where the connected state is cancelled (power transmission disconnection mode or power transmission canceling mode). The power transmission mechanism 8 is sometimes referred to as so-called "clutch" which comprises a combination of gears. The connected state of the power transmission mechanism 8 is a state where the power of the motor 7 is allowed to be transmitted to the first spool 5 via the power transmission mechanism 8. When the motor 7 is driven in this connected state, the power of the motor 7 is transmitted to the first spool 5 via the power transmission mechanism 8. During this, the rotational speed of the motor 7 is reduced by the power transmission mechanism 8. Conversely, in the disconnected state of the power transmission mechanism 8, the physical connection between the first spool 5 and the motor 7 is cancelled so as to allow the easy unwinding (withdrawing) of the seat belt 3 from the first spool 5. It should be noted that, in the embodiment, the first spool 5 and the motor 7 may be directly connected without the power transmission mechanism 8 between the first spool 5 and the motor 7, if required.

In this embodiment, the power transmission mechanism 8 of the first retractor is constructed as a so-called "single-stage clutch", but not illustrated. Accordingly, when the motor 7 is driven with a predetermined motor output in the power transmission operation mode of the power transmission mechanism 8, the rotation of the motor 7 is transmitted to the first spool 5 with the rotational speed being reduced so that the first spool 5 is rotated with predetermined rotational torque at predetermined rotational speed.

Instead of the power transmission mechanism 8, a power transmission mechanism capable of changing the rotational torque and the rotational speed of the spool at several stages may be employed. For example, in case of a two-stage clutch capable of changing the rotational torque and the rotational speed of the spool at two stages, the power transmission mechanism can be set in a high-reduction ratio mode with relatively high rotational torque and relatively low rotational speed in order to respond to a need for winding of the seat belt onto the spool with large belt tension. On the other hand, the power transmission mechanism can be set in a low-reduction ratio mode with relatively low rotational torque and relatively high rotational speed in order to respond to a need for rapid winding of the seat belt onto the spool.

On the other hand, as shown in Fig. 2, the second retractor 21 is structured as a means for winding up the seat belt 3 from the other end side thereof (the opposite side from the first retractor 1) and has a retractor housing. The second retractor 21 comprises at least a second spool 25 and a second return spring 26 within the retractor housing. The second retractor 21 corresponds to "a second winding-up means" of the present invention.

The second spool 25 is formed in a columnar or cylindrical shape of which outer periphery (seat belt contact face) functions as the wind-up surface on which the seat belt 3 is wound. The second spool 25 is allowed to rotate in the seat belt winding direction 25a and the seat belt unwinding direction 25b. The second spool 25 corresponds to "a second spool" of the present invention. The second return spring 26 is structured as a member for applying winding-up force to the second spool 25 for winding up the seat belt 3. The second return spring 26 corresponds to "a second return spring" of the present invention. As mentioned above, in the second retractor 21, the second return spring 26 is a power source for winding up the seat belt 3 onto the second spool 25.

In this embodiment, the winding-up force applied to the seat belt 3 by the second return spring 26 of the second retractor 21 is set to be larger than the winding-up force applied by the first return spring 6 of the first retractor 1 and smaller than the winding-up force as a total of the winding-up force by the first return spring 6 and the winding-up force by the motor 7 when driven.

In this embodiment, the following seven seat belt setting modes of the seat belt 3 are set. Based on these seat belt setting modes, the motor 7 and the power transmission mechanism 8 are controlled by the ECU 30.

### (1) Belt storage mode

Belt storage mode is a mode in which the seat belt 3 is not used and fully wound onto the first spool 5 and the second spool 25. In the first retractor 1 in the belt storage mode, the motor 7 is not driven and the power transmission mechanism 8 is set to the power transmission disconnection mode. Therefore, only very weak belt tension is applied to the seat belt 3 and the power consumption is zero.

### (2) Belt withdrawing mode

Belt withdrawing mode is a mode in which the seat belt 3 is withdrawn from the first spool 5 and the second spool 25 so as to be worn by the occupant. The first retractor 1 in the-belt withdrawing mode is also set in the power transmission disconnection mode. Therefore, the seat belt 3 can be withdrawn with small force. Also in this case, the motor 7 is not driven so that the power consumption is zero.

### (3) Belt winding and fitting mode

Belt winding and fitting mode is a mode in which after the seat belt 3 is withdrawn and the tongue (the tongue 12 in Fig. 1) is inserted into and latched with the buckle to turn ON the buckle switch (the buckle switch 14a in Fig. 1), excessively withdrawn part of the seat belt 3 is wound in order to fit the seat belt 3 to the occupant. Alternatively, the belt winding and fitting mode is a mode in which when the occupant moves so as to withdraw a predetermined amount of the seat belt 3 from the normally worn state of the seat belt 3 (at this point, the buckle switch is in the ON state) and then the occupant returns to the original position, the withdrawn part of the seat belt 3 is wound. In the first retractor 1 in the belt winding and fitting mode, the power transmission mechanism 8 is set to the power transmission operation mode and the motor 7 is controlled to be driven to rotate at high rotational speed in the belt winding direction. Therefore, the seat belt 3 is rapidly wound onto the first spool 5 and then the motor 7 is stopped when very small predetermined belt tension is generated, whereby the seat belt 3 is worn by and fitted to the occupant.

### (4) Normal wearing mode (comfortable mode)

Normal wearing mode (comfortable mode) is a mode in which the occupant wears the seat belt 3 in the normal state after the belt winding and fitting mode is terminated. In the first retractor 1 in the normal wearing mode, the motor 7 is not driven and the power transmission mechanism 8 is set in the power transmission disconnection mode. Therefore, only very weak belt tension is applied to the seat belt 3 so that the vehicle occupant can wear the seat belt 3 without any stress. In addition, the power consumption is zero.

### (5) Warning mode

Warning mode is a mode in which when the system detects dozing of the driver or detects an obstacle around the subject vehicle when the seat belt is in the normal wearing mode during running, the seat belt 3 is wound repeatedly predetermined times so as to warn the driver. In the first retractor 1 in the warning mode, the motor 7 is controlled to be driven repeatedly. Therefore, the operation of applying relatively strong belt tension (which is weaker than that of the belt tension during the emergency mode as will be described later) and very weak belt tension onto the seat belt 3 is alternately repeated, thereby drawing the driver's attention to the dozing and the obstacle around the subject vehicle.

### (6) Emergency mode

Emergency mode is a mode which is set when the vehicle extremely likely have a collision with an obstacle or the like during running in the normal wearing mode or following the aforementioned warning mode. In the first retractor 1 in the emergency mode, the power transmission mechanism 8 is set in the power transmission operation mode and the motor 7 is controlled to rotate at high rotational speed with high rotational torque in the belt winding direction. Therefore, the motor 7 is stopped when predetermined extremely strong belt tension is generated on the seat belt 3 after the seat belt 3 is rapidly wound onto the first spool 5, thereby securely restraining the vehicle occupant with the seat belt 3.

### (7) Belt winding and storing mode

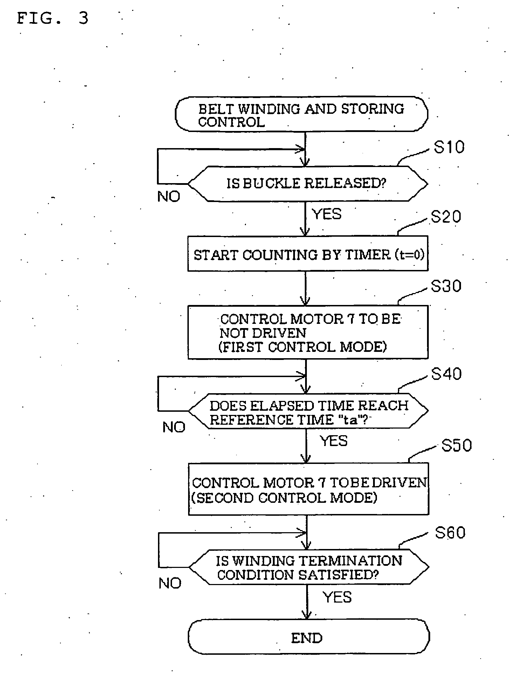

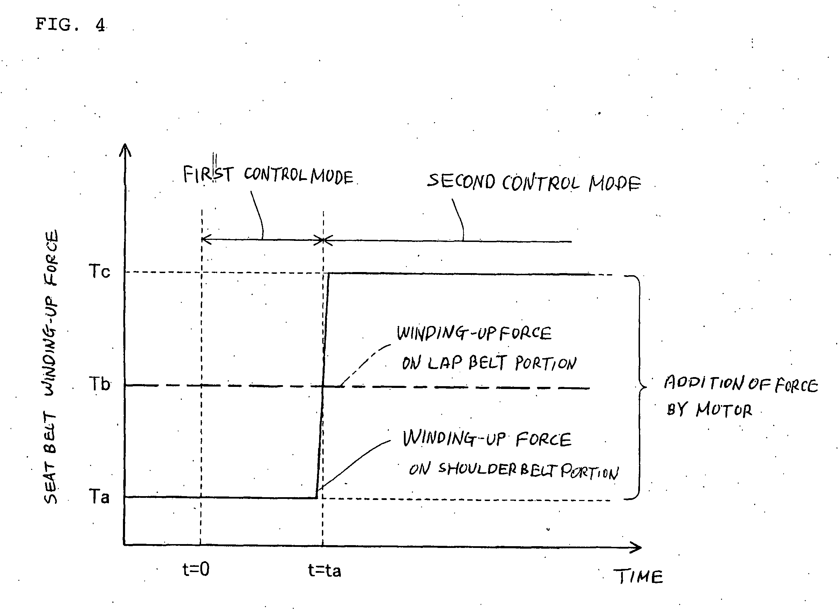

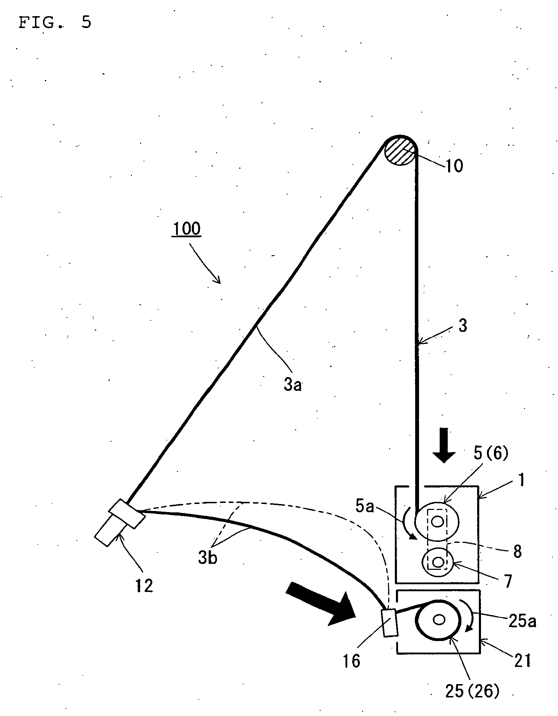

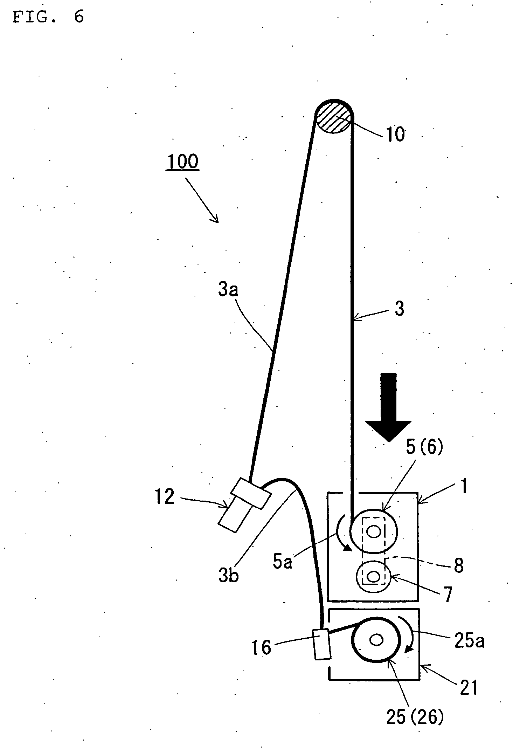

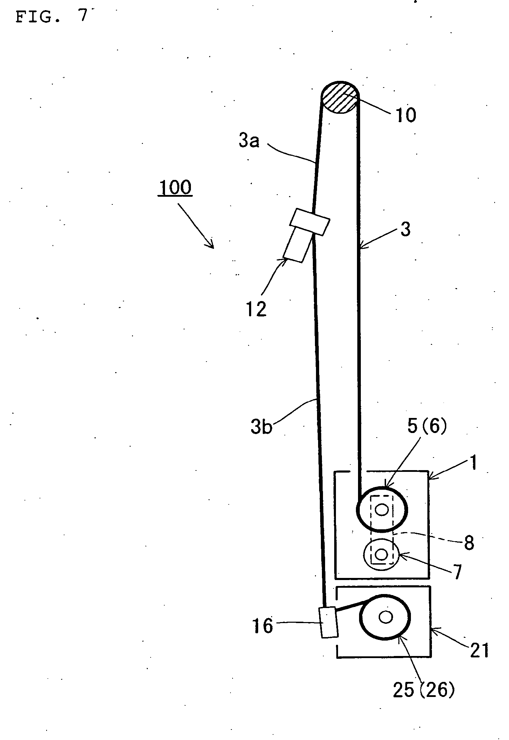

Belt winding and storing mode is a mode for fully winding up the seat belt 3 such that the seat belt 3 becomes into the storage state when the tongue (the tongue 12 in Fig. 1) is released from the buckle for canceling the wearing of the seat belt 3 (unbuckling) so that the buckle switch (the buckle switch 14a in Fig. 1) becomes OFF. Hereinafter, control detail of the "belt winding and storing mode (belt winding and storing control)" will be described in detail with reference to Fig. 3 through Fig. 7. The control in the first retractor 1 is conducted by the ECU 30 shown in Fig. 1. The flow chart for the "belt winding and storing control" in the seat belt apparatus 100 of this embodiment is shown in Fig. 3 and a graph of changes with time in seat belt winding-up force in the belt winding and storing control is shown in Fig. 4. The seat belt apparatus 100 in a state of a first control mode for the seat belt 3 thereof is shown in Fig. 5, the seat belt apparatus 100 in a state of a second control mode for the seat belt 3 thereof is shown in Fig. 6, and the seat belt apparatus 100 in a state that the "belt winding and storing control" for the seat belt 3 is terminated is shown in Fig. 7.

In the belt winding and storing control shown in Fig. 3, in step S10, it is determined whether the buckle is released or not (the seat belt is switched from the buckled state to the unbuckled state or not). Specifically, when the buckle switch 14a becomes from ON state to OFF state based on detected information by the buckle switch 14a which detects the insertion and latching of the tongue 12 relative to the seat belt buckle 14 shown in Fig. 1, it is determined that the buckle is released. This determination is made by the ECU 30 detecting the detected information by the buckle switch 14a. In step S10, this process is continued until the buckle is released and then proceeds to step S20. In step S20 in Fig. 3, count by a timer (not shown) is started. Then, process proceeds to step S30.

In step S30 in Fig. 3, a first control mode is set in which the motor 7 of the first retractor 1 is controlled to be not driven. Specifically, the ECU 30 conducts a control of outputting a stopping signal to the motor 7 and setting the power transmission mechanism 8 to the power transmission disconnection mode. When this control has been conducted at step 10, the control is continued. That is, at step S30, no seat belt winding-up force by the motor 7 acts on the seat belt 3. As mentioned above, in this embodiment, the winding-up force applied to the seat belt 3 by the second return spring 26 of the second retractor 21 is set to be larger than the winding-up force by the first return spring 6 of the first retractor 1.

In the first control mode of the step S30, the seat belt winding-up force Tb acting on the lap belt portion 3b as a part of the seat belt 3 by the second return spring 26 is larger than the seat belt winding-up force Ta acting on the shoulder belt portion 3a as another part of the seat belt 3 by the first return spring 6. (See First Control Mode in Fig. 4.)

As shown in Fig. 5, the second spool 25 is rotated in the winding direction more rapidly and more strongly than the first spool 5 so that the lap belt portion 3b as a part of the seat belt 3 is mainly (preferentially) wound up as compared to the other part of the seat belt 3. The "lap belt portion 3b is mainly wound up" means a state that the wound amount of the lap belt portion 3b is relatively larger than that of the shoulder belt portion 3a. In the first control mode, the shoulder belt portion 3a may be partially wound up or may not be wound up at all.
This operational state corresponds to "the lap belt portion is wound up onto the second spool of the second winding-up means by controlling the electric motor of the first winding-up means to be not driven" as described in claim 2.

According to the first control mode as mentioned above, just after buckle release, the tongue 12 moves substantially horizontally from the region around occupant's cabin-side hip (on the left side in Fig. 5) corresponding to the position of the buckle 14 to the region around occupant's door-side hip on the right side in Fig. 5 so that the tongue 12 moves to a position not to disturb the vehicle occupant when getting off the vehicle. The moving path of the tongue 12 is a path across the abdomen or the hip of the vehicle occupant which is shorter than the path of the tongue in case of moving to an upper part of the vehicle, thereby shortening the time the tongue 12 takes to move to the position not to disturb the vehicle occupant when getting off the vehicle. The moving path lies below the normal eye level of the vehicle occupant and far away from the range of view of the vehicle occupant, thereby preventing the vehicle occupant from feeling uncomfortable due to the movement of the tongue 12. Since the tongue 12 moves substantially horizontally during winding up the lap belt portion 3b, the driving force of the second return spring 26 can be reduced as compared to the case of winding-up so as to lift the tongue 12, thereby enabling reduction in size, weight, and cost of the second return spring 26. By the arrangement of mainly storing the lap belt portion 3b, the lap belt portion 3b including the tongue 12 is prevented from disturbing the vehicle occupant when getting off the vehicle and is also prevented from being caught by the door. Therefore, it is no longer necessary to rapidly wind up the shoulder belt portion 3a in the second control mode. The winding speed by the motor 7 can be reduced, thereby preventing discordant motor operating sound and noise generation.

Then, in step S40 in Fig. 3, it is determined whether the elapsed time of which counting was started at step S20 reaches a predetermined reference time "ta" or not. The reference time "ta" is suitably set according to the specification of the seat belt apparatus such as the length of the seat belt 3. In step S40, the process is continued until the elapsed time reaches to the reference time "ta" and then proceeds to step S50.

In step S50 in Fig. 3, a second control mode is set in which the motor 7 of the first retractor 1 is controlled to be driven. Specifically, the ECU 30 conducts a control of outputting a driving signal to the motor 7 and setting the power transmission mechanism 8 to the power transmission operation mode. Therefore, in step S50, the seat belt winding-up force by the motor 7 acts on the seat belt 3. As mentioned above, in this embodiment, the winding-up force applied to the seat belt 3 by the second return spring 26 of the second retractor 21 is set to be smaller than the winding-up force as a total of the winding-up force by the first return spring 6 and the winding-up force by the motor 7.

Accordingly, in the second control mode in step S50, the seat belt winding-up force Tc acting on the shoulder belt portion 3a as a part of the seat belt 3 by the first return spring 6 and the motor 7 becomes larger than the seat belt winding-up force Tb acting on the lap belt portion 3b as another part of the seat belt 3 by the second return spring 26. (See Second Control Mode in Fig. 4.) That is, the difference between the seat belt winding-up force Tc and the seat belt winding-up force Ta shown in Fig. 4 is an addition (increase) of the seat belt winding-up force by the motor 7.

As shown in Fig. 6, the first spool 5 is rotated in the winding direction more rapidly and more strongly than the second spool 25 so that the shoulder belt portion 3a as a part of the seat belt 3 is mainly (preferentially) wound up as compared to the other part of the seat belt 3. The "shoulder belt portion 3a is mainly wound up" means a state that the wound amount of the shoulder belt portion 3a is relatively larger than that of the lap belt portion 3b. In the second control mode, the lap belt portion 3b may be partially wound up or may not be wound up at all.
This operational state corresponds to "the shoulder belt portion is wound up onto the first spool of the first winding-up means by controlling the electric motor of the first winding-up means to be driven" as described in claim 2.

According to the second control mode as mentioned above, the tongue 12 moves upward from the position not to disturb the vehicle occupant when getting off the vehicle (the position shown by solid lines in Fig. 6) to an upper side in Fig. 6 just after the first control mode.

Finally, in step S60 in Fig. 3, it is determined whether a winding termination condition for winding of the seat belt 3 is satisfied or not. When it is determined that the winding termination condition is satisfied (YES in step S60), the belt winding and storing control is terminated. The determination may be made in accordance with a predetermined period of time or a condition that the tension on the seat belt 3 reaches to a reference value. Therefore, at the end of the belt winding and storing control, the seat belt 3 is fully wound onto the first spool 5 and the second spool 25 as shown in Fig. 7 so that the seat belt 3 becomes into a state in which a very weak belt tension acts on the seat belt 3.

According to the seat belt apparatus 100 of this embodiment as mentioned above, in the first control mode just after buckle release, the time the tongue 12 located in the region around occupant's door-side hip takes to move to the position not to disturb the vehicle occupant when getting off the vehicle can be reduced. Further, because the moving path of the tongue 12 is far away from the range of view of the vehicle occupant, it can prevent the vehicle occupant from feeling uncomfortable due to the movement of the tongue 12. Because the tongue 12 moves substantially horizontally, the driving force of the second return spring 26 can be reduced, thereby enabling reduction in size, weight, and cost of the second return spring 26. By the arrangement of mainly storing the lap belt portion 3b, the lap belt portion 3b including the tongue 12 is prevented from disturbing the vehicle occupant when getting off the vehicle and is also prevented from being caught by the door. Therefore, it is no longer necessary to rapidly wind up the shoulder belt portion 3a in the second control mode just after the first control mode. The winding speed by the motor 7 can be reduced, thereby preventing discordant motor operating sound and noise generation.

According to the seat belt apparatus 100 of this embodiment, because the seat belt winding-up force by the first return spring 6 relating to the winding of the shoulder belt portion 3a is set to be smaller than the seat belt winding-up force by the second return spring 26 relating to the winding of the lap belt portion 3b, the workload of pulling the seat belt 3 from the first retractor 1 (the first spool 5) is light, facilitating the operation for wearing the seat belt. In addition, uncomfortable feeling of the vehicle occupant due to load applied via the shoulder belt portion 3a when wearing the seat belt 3 can be reduced.

In the seat belt apparatus 100 of this embodiment, the warning mode is performed by controlling the motor 7 relating to the winding of the shoulder belt 3a. The shoulder belt portion 3a is the best portion for warning the driver among the portions of the seat belt 3. Therefore, the seat belt apparatus 100 in which the shoulder belt portion 3a is wound up by the motor 7 is effective for reliably warning the driver through the seat belt 3.

### Second Embodiment

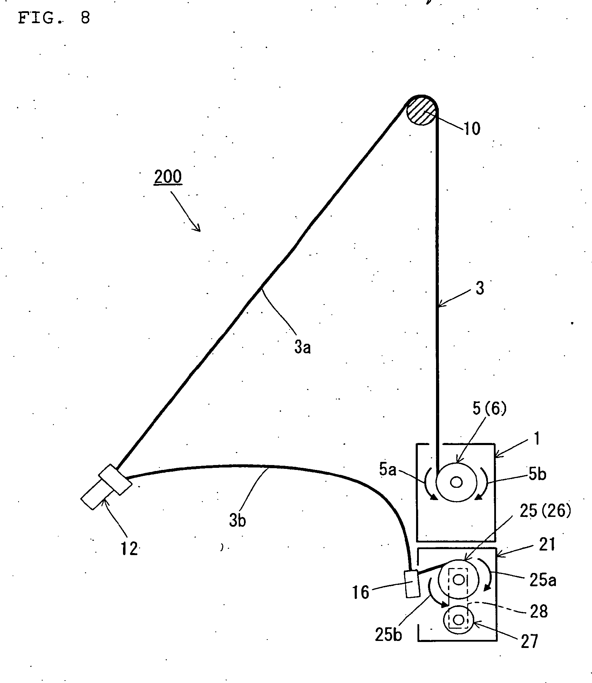

Though the motor 7 is installed in the first retractor 1 in the seat belt apparatus 100 of the aforementioned embodiment, the motor 7 and the power transmission mechanism 8 of the first retractor 1 may be omitted and an electric motor 27 like the motor 7 and a power transmission mechanism 28 may be installed in the second retractor 21 in the present invention. The schematic structure of the first retractor 1 and the second retractor 21 in a seat belt apparatus 200 according to the second embodiment is shown in Fig. 8. In the seat belt apparatus 200, the winding-up force applied to the seat belt 3 by the first return spring 6 of the first retractor 1 is set to be larger than the winding-up force by the second return spring 26 of the second retractor 21 and is set to be smaller than the winding-up force as a total of the winding-up force by the second return spring 26 and the winding-up force by the motor 27 when driven. The motor 27 corresponds to the "electric motor" of the present invention.

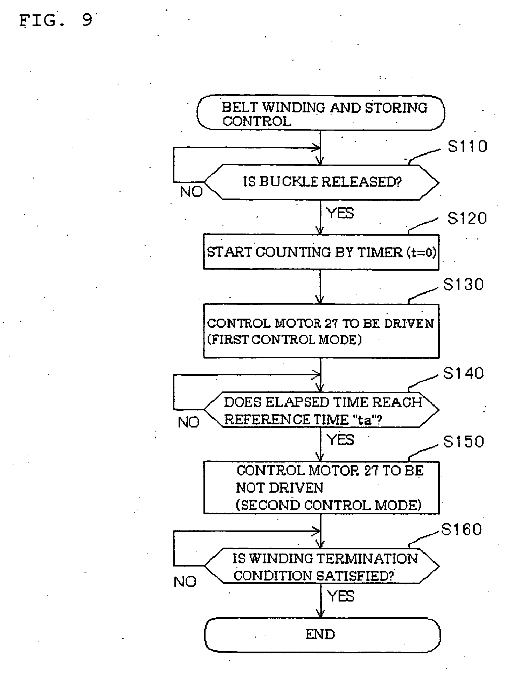

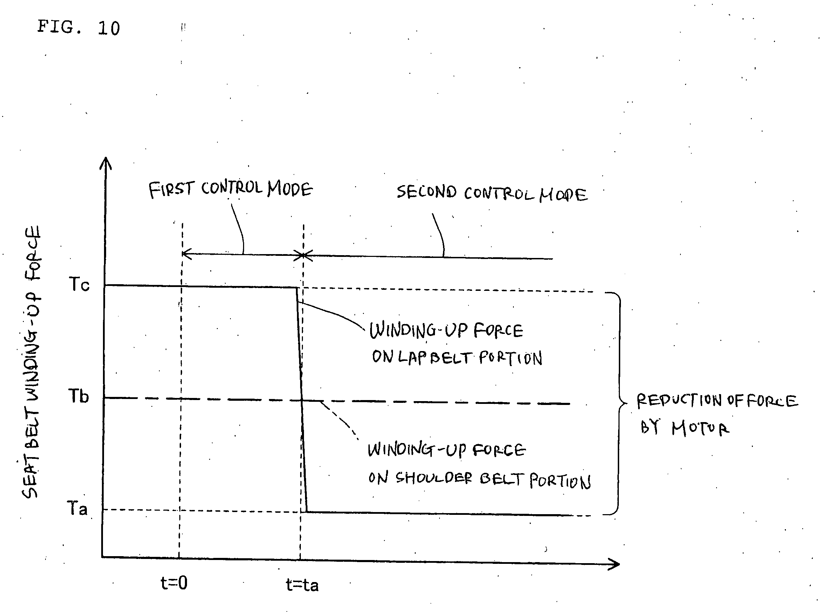

The flow chart for the "belt winding and storing control" in the seat belt apparatus 200 of this embodiment is shown in Fig. 9 and a graph of changes with time in seat belt winding-up force in the belt winding and storing control is shown in Fig. 10. In the belt winding and storing control shown in Fig. 9, the steps are substantially the same as those of the belt winding and storing control shown in Fig. 3 except step S130 and step S150. Steps S10, S20, S40, and S60 in Fig. 3 correspond to steps S110, S120, S140, and S160 in Fig. 9, respectively. Therefore, the following description will be made only on step S130 and step S150.

In step S130 in Fig. 9, a first control mode is set in which the motor 27 of the second retractor 21 is controlled to be driven. Specifically, the ECU 30 conducts a control of outputting a driving signal to the motor 27 and setting the power transmission mechanism 28 to the power transmission operation mode. Therefore, in step S130, the seat belt winding-up force by the motor 27 acts on the seat belt 3. As mentioned above, in this embodiment, the winding-up force applied to the seat belt 3 by the first return spring 6 of the first retractor 1 is set to be smaller than the winding-up force as a total of the winding-up force by the second return spring 26 and the winding-up force by the motor 27.

Accordingly, in the first control mode at step S130, the seat belt winding-up force Tc acting on the lap belt portion 3b as a part of the seat belt 3 by the second return spring 26 and the motor 27 becomes larger than the seat belt winding-up force Tb acting on the shoulder belt portion 3a as another part of the seat belt by the first return spring 6. (See First Control Mode in Fig. 10.) Therefore, the second spool 25 is rotated in the winding direction more rapidly and more strongly than the first spool 5 so that the lap belt portion 3b as a part of the seat belt 3 is mainly (preferentially) wound up as compared to the other part of the seat belt 3.
This operational state corresponds to "the lap belt portion is wound up onto the second spool of the second winding-up means by controlling the electric motor of the second winding-up means to be driven" as described in claim 3.

On the other hand, in step S150 in Fig. 9, a second control mode is set in which the motor 27 of the second retractor 21 is controlled to be not driven. Specifically, the ECU 30 conducts a control of outputting a stopping signal to the motor 27 and setting the power transmission mechanism 28 to the power transmission disconnection mode. That is, at step S150, no seat belt winding-up force by the motor 27 acts on the seat belt 3. As mentioned above, in this embodiment, the winding-up force applied to the seat belt 3 by the first return spring 6 of the first retractor 1 is set to be larger than the winding-up force by the second return spring 26 of the second retractor 21.

In the second control mode in the step S150, the seat belt winding-up force Tb acting on the shoulder belt portion 3a as a part of the seat belt 3 by the first return spring 6 is larger than the seat belt winding-up force Ta acting on the lap belt portion 3a as another part of the seat belt by the second return spring 26. (See Second Control Mode in Fig. 10.) That is, the difference between the seat belt winding-up force Tc and the seat belt winding-up force Ta shown in Fig. 10 is a reduction of the seat belt winding-up force by the motor 27. Accordingly, the first spool 5 is rotated in the winding direction strongly at high speed as compared to the second spool 25, whereby=the shoulder belt portion 3a as a part of the seat belt 3 is mainly (preferentially) wound up as compared to the other part of the seat belt 3.
This operational state corresponds to "the shoulder belt portion is wound up onto the first spool of the first winding-up means by controlling the electric motor of the second winding-up means to be not driven" as described in claim 3.

This arrangement of the seat belt apparatus 200 according to the second embodiment also exhibit works and effects similar to the works and effects described with regard to the seat belt apparatus 100 of the aforementioned embodiment. In addition, the motor 27 is used as a power source for the second spool 25 of the second retractor 21 and the motor 27 is driven only within a relatively short period of time just after the buckle release, thereby reducing the time of discordant motor operating sound and noise generation due to the motor 27.

### Third Embodiment

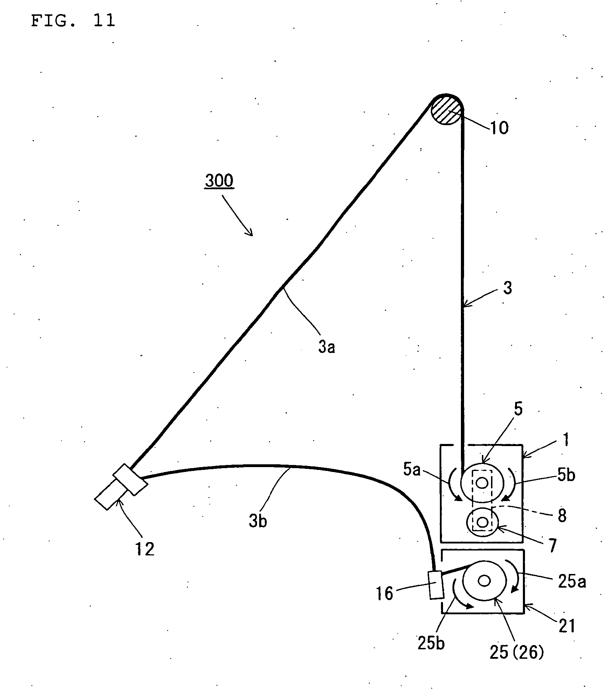

The present invention may also employ an arrangement that the first return spring 6 of the first retractor 1 is omitted in the seat belt apparatus 100 of the aforementioned embodiment. The schematic structure of the first retractor 1 and the second retractor 21 in a seat belt apparatus 300 according to the third embodiment is shown in Fig. 11. In the seat belt apparatus 300 shown in Fig. 11, the winding-up force applied to the seat belt 3 by the second return spring 26 is set to be larger than the winding-up force by the motor 7 when not driven and smaller than the winding-up force by the motor 7 when driven. The second return spring 26 corresponds to "a return spring" described in claim 4.

The "belt winding and storing control" in the seat belt apparatus 300 is achieved by performing sequentially the same steps as the steps in the flow chart shown in Fig. 3. In this case, the operational state in step S30 in Fig. 3 corresponds to "the lap belt portion is wound up onto the second spool of the second winding-up means by controlling the electric motor of the first winding-up means to be not driven" as described in claim 4 and the operational state in step S50 in Fig. 3 corresponds to "the shoulder belt portion is wound up onto the first spool of the first winding-up means by controlling the electric motor of the first winding-up means to be driven" as described in claim 4.

This arrangement of the seat belt apparatus 300 according to the third embodiment also exhibit works and effects similar to the works and effects described with regard to the seat belt apparatus 100 of the aforementioned embodiment. In addition, the first return spring 6 of the first retractor 1 is omitted, thereby achieving the simplification, miniaturization, reduction in weight and reduction in cost of the first retractor 1.

### Fourth Embodiment

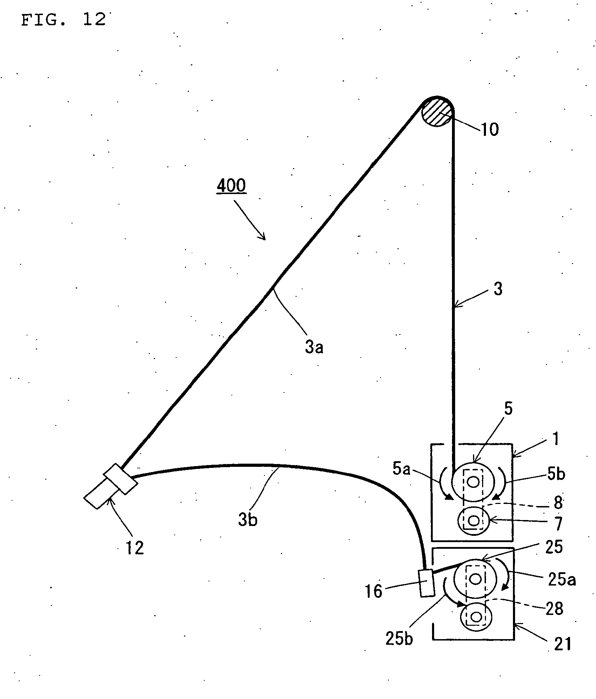

The present invention may also employ an arrangement that the first return spring 6 of the first retractor 1 and the second return spring 26 of the second retractor 21 are omitted in the seat belt apparatus 100 of the aforementioned embodiment and an electric motor 27 like the motor 7 and a power transmission mechanism 28 are installed in the second retractor 21. The schematic structure of the first retractor 1 and the second retractor 21 in a seat belt apparatus 400 according to the fourth embodiment is shown in Fig. 12. In the seat belt apparatus 400 shown in Fig. 12, the first control mode and the second control mode are achieved by controlling the motors of the respective retractors without using the return springs. Specifically, in the first control mode, only the motor 27 of the second retractor 21 is driven to rotate so that the lap belt portion 3b is mainly (preferentially) wound up. On the other hand, in the second control mode, only the motor 7 of the first retractor 1 is driven to rotate so that the shoulder belt portion 3a is mainly (preferentially) wound up. The arrangement of the seat belt apparatus 400 according to the fourth embodiment also exhibit works and effects similar to the works and effects described with regard to the seat belt apparatus 100 of the aforementioned embodiment.

The above embodiments have been described with regard to the seat belt apparatuses 100, 200, 300, 400 to be installed in an automobile, the seat belt apparatus of the present invention can be adapted to seat belt apparatuses to be installed in a vehicle for transfer of occupant(s) such as automobile, aircraft, boat, train, and bus.

## Claims

1. A seat belt apparatus comprising:
a seat belt (3) which can be worn by a vehicle occupant;
a first winding-up means (1) for winding up said seat belt (3) from one end side thereof;
a second winding-up means (21) which is disposed in a region around occupant's door-side hip to wind up said seat belt (3) from the other end side thereof;
a deflection fitting (10) for holding said seat belt (3) to a region around occupant's shoulder;
a tongue (12) attached to said seat belt; and
a buckle (14) to which said tongue (12) can be latched and which is disposed in a region around occupant's cabin-side hip;
wherein said seat belt (3) extends from said first winding-up means (1) through said deflection fitting (10) and further extends to said second winding-up means (21) through said tongue (12) and said seat belt (3) forms a shoulder belt portion (3a) on said first winding-up means (1) side before said tongue (12) and a lap belt portion (3b) on said second winding-up means (21) side after said tongue (12) when said tongue (12) is latched to said buckle (14) so that said seat belt (3) is worn, and
said first winding-up means (1) and said second winding-up means (21) are adapted to operate such that after canceling the latching of said tongue (12) relative to said buckle (14) i.e. buckle release, said lap belt portion (3b) of said seat belt (3) is first wound up and said shoulder belt portion (3a) of said seat belt (3) is then wound up, wherein
said first winding-up means (1) comprises a first return spring (6) and an electric motor (7) for applying winding-up force to a first spool (5) for winding up said seat belt (3),
said second winding-up means (21) comprises a second return spring (26) for applying winding-up force to a second spool (25) for winding up said seat belt (3),
the winding-up force applied to said seat belt (3) by said second return spring (26) is set to be larger than the winding-up force by said first return spring (6) and to be smaller than the winding-up force as a total of the winding-up force by said first return spring (6) and the winding-up force by said electric motor (7) when driven, and
said lap belt portion (36) is wound up onto said second spool (25) of said second winding-up means (21) by controlling said electric motor (7) of said first winding-up means (1) to be not driven, while said shoulder belt portion (3a) is wound up onto said first spool (5) of said first winding-up means (1) by controlling said electric motor (7) of said first winding-up means (1) to be driven.

2. A seat belt apparatus comprising:
a seat belt (3) which can be worn by a vehicle occupant;
a first winding-up means (1) for winding up said seat belt (3) from one end side thereof;
a second winding-up means (21) which is disposed in a region around occupant's door-side hip to wind up said seat belt (3) from the other end side thereof;
a deflection fitting (10) for holding said seat belt (3) to a region around occupant's shoulder;
a tongue (12) attached to said seat belt; and
a buckle (14) to which said tongue (12) can be latched and which is disposed in a region around occupant's cabin-side hip;
wherein said seat belt (3) extends from said first winding-up means (1) through said deflection fitting (10) and further extends to said second winding-up means (21) through said tongue (12) and said seat belt (3) forms a shoulder belt portion (3a) on said first winding-up means (1) side before said tongue (12) and a lap belt portion (3b) on said second winding-up means (21) side after said tongue (12) when said tongue (12) is latched to said buckle (14) so that said seat belt (3) is worn, and
said first winding-up means (1) and said second winding-up means (21) are adapted to operate such that after canceling the latching of said tongue (12) relative to said buckle (14) i.e. buckle release, said lap belt portion (3b) of said seat belt (3) is first wound up and said shoulder belt portion (3a) of said seat belt (3) is then wound up, wherein
said first winding-up means (1) comprises a first return spring (6) for applying winding-up force to a first spool (5) for winding up said seat belt (3),
said second winding-up means (21) comprises a second return spring (26) and an electric motor (27) for applying winding-up force to a second spool (25) for winding up said seat belt,
the winding-up force applied to said seat belt (3) by said first return spring (6) is set to be larger than the winding-up force by said second return spring (26) and to be smaller than the winding-up force as a total of the winding-up force by said second return spring (26) and the winding-up force by said electric motor (27) when driven, and
said lap belt portion (36) is wound up onto said second spool (25) of said second winding-up means (21) by controlling said electric motor (27) of said second winding-up means (21) to be driven, while said shoulder belt portion (3a) is wound up onto said first spool (5) of said first winding-up means (1) by controlling said electric motor (27) of said second winding-up means (21) to be not driven.

3. A seat belt apparatus comprising:
a seat belt (3) which can be worn by a vehicle occupant;
a first winding-up means (1) for winding up said seat belt (3) from one end side thereof;
a second winding-up means (21) which is disposed in a region around occupant's door-side hip to wind up said seat belt (3) from the other end side thereof;
a deflection fitting (10) for holding said seat belt (3) to a region around occupant's shoulder;
a tongue (12) attached to said seat belt; and
a buckle (14) to which said tongue (12) can be latched and which is disposed in a region around occupant's cabin-side hip;
wherein said seat belt (3) extends from said first winding-up means (1) through said deflection fitting (10) and further extends to said second winding-up means (21) through said tongue (12) and said seat belt (3) forms a shoulder belt portion (3a) on said first winding-up means (1) side before said tongue (12) and a lap belt portion (3b) on said second winding-up means (21) side after said tongue (12) when said tongue (12) is latched to said buckle (14) so that said seat belt (3) is worn, and
said first winding-up means (1) and said second winding-up means (21) are adapted to operate such that after canceling the latching of said tongue (12) relative to said buckle (14) i.e. buckle release, said lap belt portion (3b) of said seat belt (3) is first wound up and said shoulder belt portion (3a) of said seat belt (3) is then wound up, wherein
said first winding-up means (1) comprises an electric motor (7) for applying winding-up force to a first spool (5) for winding up said seat belt (3),
said second winding-up means (21) comprises a return spring (26) for applying winding-up force to a second spool (25) for winding up said seat belt (3),
the winding-up force applied to said seat belt (3) by said return spring (26) is set to be larger than the winding-up force by said electric motor (7) when not driven and to be smaller than the winding-up force by said electric motor (7) when driven, and
said lap belt portion (3b) is wound up onto said second spool (25) of said second winding-up means (21) by controlling said electric motor (7) of said first winding-up means (1) to be not driven, while said shoulder belt portion (3a) is wound up onto said first spool (5) of said first winding-up means (1) by controlling said electric motor (7) of said first winding-up means (1) to be driven.

4. A vehicle comprising a running system including an engine; an electrical system; a drive control device (30) for conducting the drive control of said running system and said electrical system; and a seat belt apparatus for restraining a vehicle occupant in the event of a vehicle collision, wherein
said seat belt apparatus (100; 200; 300; 400) is a seat belt apparatus as claimed in any one of claims 1 through 3.

## Patentansprüche

1. Sicherheitsgurtanordnung mit:
einem Sicherheitsgurt (3), der von einem Fahrzeuginsassen angelegt werden kann;
einer ersten Aufwickelvorrichtung (1) zum Aufwickeln des Sicherheitsgurtes (3) von einem Ende her;
eine zweite Aufwickelvorrichtung (21), welche in einem Bereich nahe der türseitigen Hüfte des Insassen angeordnet ist, um den Sicherheitsgurt (3) vom anderen Ende her aufzuwickeln;
eine Umlenkeinrichtung (10) zum Halten des Sicherheitsgurtes (3) im Bereich der Schulter des Insassen;
eine Einstecklasche (12), die an dem Sicherheitsgurt befestigt ist; und
ein Gurtschloss (14), in das die Einstecklasche (12) eingeklinkt werden kann und das in einem Bereich nahe der kabinenseitigen Hüfte des Insassen angeordnet ist;
wobei der Sicherheitsgut (3) sich von der ersten Aufwickelvorrichtung (1) über die Umlenkeinrichtung (10) und weiter durch die Einstecklasche (12) zur zweiten Aufwickelvorrichtung (21) erstreckt und der Sicherheitsgurt (3) einen Schulter-Gurtabschnitt (3a) an dem Ende an der ersten Aufwickelvorrichtung (1) vor der Einstecklasche (12) und einem Becken-Gurtabschnitt (3b) an dem Ende an der zweiten Aufwickelvorrichtung (21) nach der Einstecklasche (12) ausbildet, wenn die Einstecklasche (12) in das Gurtschloss (14) eingeklinkt ist, so dass der Sicherheitsgurt (3) angelegt ist, und
die erste Aufwickelvorrichtung (1) und die zweite Aufwickelvorrichtung (21) dafür eingerichtet sind, nach dem Ausklinken der Einstecklasche (12) aus dem Gurtschloss (14), d.h. bei der Gurtschloss-Entriegelung, den Becken-Gurtabschnitt (3b) des Sicherheitsgurts (3) zuerst aufzuwickeln und danach den Schulter-Gurtabschnitt (3a) des Sicherheitsgurts (3) aufzuwickeln,
wobei die erste Aufwickelvorrichtung (1) eine erste Rückholfeder (6) und einen Elektro-Motor (7) zum Ausüben einer Aufwickelkraft auf eine erste Rolle (5) zum Aufwickeln des Sicherheitsgurts (3) aufweist,
die zweite Aufwickelvorrichtung (21) eine zweite Rückholfeder (26) zum Ausüben einer Aufwickelkraft auf eine zweite Rolle (25) zum Aufwickeln des Sicherheitsgurts (3) aufweist,
die auf den Sicherheitsgurt (3) einwirkende Aufwickelkraft der zweiten Rückholfeder (26) größer eingestellt ist als die Aufwickelkraft der ersten Rückholfeder (6) und kleiner ist als die Summe der Aufwickelkraft der ersten Rückholfeder (6) und der Aufwickelkraft des angetriebenen Elektro-Motors (7), und
der Becken-Gurtabschnitt (3b) auf die zweite Rolle (25) der zweiten Aufwickelvorrichtung (21) aufgewickelt wird, indem der Elektro-Motor (7) der ersten Aufwickelvorrichtung (1) als nicht angetrieben gesteuert wird, während der Schulter-Gurtabschnitt (3a) auf die erste Rolle (5) der ersten Aufwickelvorrichtung (1) aufgewickelt wird, indem der Elektro-Motor (7) der ersten Aufwickelvorrichtung (1) als angetrieben gesteuert wird.

2. Sicherheitsgurtanordnung mit:
einem Sicherheitsgurt (3), der von einem Fahrzeuginsassen angelegt werden kann;
einer ersten Aufwickelvorrichtung (1) zum Aufwickeln des Sicherheitsgurtes (3) von einem Ende her;
eine zweite Aufwickelvorrichtung (21), welche in einem Bereich nahe der türseitigen Hüfte des Insassen angeordnet ist, um den Sicherheitsgurt (3) vom anderen Ende her aufzuwickeln;
eine Umlenkeinrichtung (10) zum Halten des Sicherheitsgurtes (3) im Bereich der Schulter des Insassen;
eine Einstecklasche (12), die an dem Sicherheitsgurt befestigt ist; und
ein Gurtschloss (14), in das die Einstecklasche (12) eingeklinkt werden kann und das in einem Bereich nahe der kabinenseitigen Hüfte des Insassen angeordnet ist;
wobei der Sicherheitsgut (3) sich von der ersten Aufwickelvorrichtung (1) über die Umlenkeinrichtung (10) und weiter durch die Einstecklasche (12) zur zweiten Aufwickelvorrichtung (21) erstreckt und der Sicherheitsgurt (3) einen Schulter-Gurtabschnitt (3a) an dem Ende an der ersten Aufwickelvorrichtung (1) vor der Einstecklasche (12) und einem Becken-Gurtabschnitt (3b) an dem Ende an der zweiten Aufwickelvorrichtung (21) nach der Einstecklasche (12) ausbildet, wenn die Einstecklasche (12) in das Gurtschloss (14) eingeklinkt ist, so dass der Sicherheitsgurt (3) angelegt ist, und
die erste Aufwickelvorrichtung (1) und die zweite Aufwickelvorrichtung (21) dafür eingerichtet sind, nach dem Ausklinken der Einstecklasche (12) aus dem Gurtschloss (14), d.h. bei der Gurtschloss-Entriegelung, den Becken-Gurtabschnitt (3b) des Sicherheitsgurts (3) zuerst aufzuwickeln und danach den Schulter-Gurtabschnitt (3a) des Sicherheitsgurts (3) aufzuwickeln,
wobei die erste Aufwickelvorrichtung (1) eine erste Rückholfeder (6) zum Ausüben einer Aufwickelkraft auf eine erste Rolle (5) zum Aufwickeln des Sicherheitsgurts (3) aufweist,
die zweite Aufwickelvorrichtung (21) eine zweite Rückholfeder (26) und einen Elektro-Motor (27) zum Ausüben einer Aufwickelkraft auf eine zweite Rolle (25) zum Aufwickeln des Sicherheitsgurts aufweist,
die auf den Sicherheitsgurt (3) einwirkende Aufwickelkraft der ersten Rückholfeder (6) größer eingestellt ist als die Aufwickelkraft der zweiten Rückholfeder (26) und kleiner ist als die Summe der Aufwickelkraft der zweiten Rückholfeder (26) und der Aufwickelkraft des angetriebenen Elektro-Motors (27), und
der Becken-Gurtabschnitt (3b) auf die zweite Rolle (25) der zweiten Aufwickelvorrichtung (21) aufgewickelt wird, indem der Elektro-Motor (27) der zweiten Aufwickelvorrichtung (21) als angetrieben gesteuert wird, während der Schulter-Gurtabschnitt (3a) auf die erste Rolle (5) der ersten Aufwickelvorrichtung (1) aufgewickelt wird, indem der Elektro-Motor (27) der zweiten Aufwickelvorrichtung (21) als nicht angetrieben gesteuert wird.

3. Sicherheitsgurtanordnung mit:
einem Sicherheitsgurt (3), der von einem Fahrzeuginsassen angelegt werden kann;
einer ersten Aufwickelvorrichtung (1) zum Aufwickeln des Sicherheitsgurtes (3) von einem Ende her;
eine zweite Aufwickelvorrichtung (21), welche in einem Bereich nahe der türseitigen Hüfte des Insassen angeordnet ist, um den Sicherheitsgurt (3) vom anderen Ende her aufzuwickeln;
eine Umlenkeinrichtung (10) zum Halten des Sicherheitsgurtes (3) im Bereich der Schulter des Insassen;
eine Einstecklasche (12), die an dem Sicherheitsgurt befestigt ist; und
ein Gurtschloss (14), in das die Einstecklasche (12) eingeklinkt werden kann und das in einem Bereich nahe der kabinenseitigen Hüfte des Insassen angeordnet ist;
wobei der Sicherheitsgut (3) sich von der ersten Aufwickelvorrichtung (1) über die Umlenkeinrichtung (10) und weiter durch die Einstecklasche (12) zur zweiten Aufwickelvorrichtung (21) erstreckt und der Sicherheitsgurt (3) einen Schulter-Gurtabschnitt (3a) an dem Ende an der ersten Aufwickelvorrichtung (1) vor der Einstecklasche (12) und einem Becken-Gurtabschnitt (3b) an dem Ende an der zweiten Aufwickelvorrichtung (21) nach der Einstecklasche (12) ausbildet, wenn die Einstecklasche (12) in das Gurtschloss (14) eingeklinkt ist, so dass der Sicherheitsgurt (3) angelegt ist, und
die erste Aufwickelvorrichtung (1) und die zweite Aufwickelvorrichtung (21) dafür eingerichtet sind, nach dem Ausklinken der Einstecklasche (12) aus dem Gurtschloss (14), d.h. bei der Gurtschloss-Entriegelung, den Becken-Gurtabschnitt (3b) des Sicherheitsgurts (3) zuerst aufzuwickeln und danach den Schulter-Gurtabschnitt (3a) des Sicherheitsgurts (3) aufzuwickeln,
wobei die erste Aufwickelvorrichtung (1) einen Elektro-Motor (7) zum Ausüben einer Aufwickelkraft auf eine erste Rolle (5) zum Aufwickeln des Sicherheitsgurts (3) aufweist,
die zweite Aufwickelvorrichtung (21) eine Rückholfeder (26) zum Ausüben einer Aufwickelkraft auf eine zweite Rolle (25) zum Aufwickeln des Sicherheitsgurts (3) aufweist,
die auf den Sicherheitsgurt (3) einwirkende Aufwickelkraft der Rückholfeder (26) größer eingestellt ist als die Aufwickelkraft des nicht angetriebenen Elektro-Motors (7) und kleiner ist als die Aufwickelkraft des angetriebenen Elektro-Motors (7), und
der Becken-Gurtabschnitt (3b) auf die zweite Rolle (25) der zweiten Aufwickelvorrichtung (21) aufgewickelt wird, indem der Elektro-Motor (7) der ersten Aufwickelvorrichtung (1) als nicht angetrieben gesteuert wird, während der Schulter-Gurtabschnitt (3a) auf die erste Rolle (5) der ersten Aufwickelvorrichtung (1) aufgewickelt wird, indem der Elektro-Motor (7) der ersten Aufwickelvorrichtung (1) als angetrieben gesteuert wird.

4. Fahrzeug, das ein Antriebssystem mit einem Motor, ein elektrisches System, ein Fahrsteuerungsgerät (30) zum Leiten der Fahrsteuerung des Antriebssystems und des elektrischen Systems, und eine Sicherheitsgurtanordnung (100; 200; 300; 400) nach einem der Ansprüche 1 bis 3 zum Rückhalten eines Fahrzeuginsassen bei einer Fahrzeugkollision aufweist.

## Revendications

1. Dispositif de ceinture de sécurité, comprenant :
◆ une ceinture de sécurité (3) qui peut être portée par un occupant de véhicule ;
◆ de premiers moyens d'enroulement (1) pour enrouler ladite ceinture de sécurité (3) à partir d'un côté d'extrémité de celle-ci ;
◆ de seconds moyens d'enroulement (21) qui sont disposés dans une zone à proximité de la hanche d'un occupant côté portière pour enrouler ladite ceinture de sécurité (3) à partir de l'autre extrémité de celle-ci ;
◆ un accessoire de déviation (10) pour retenir ladite ceinture de sécurité (3) sur une zone à proximité de l'épaule d'un occupant ;
◆ une languette (12) fixée à ladite ceinture de sécurité ; et
◆ une boucle (14) dans laquelle ladite languette (12) peut être verrouillée et qui est disposée dans une zone à proximité de la hanche d'un occupant côté habitacle ;
dans lequel ladite ceinture de sécurité (3) s'étend depuis lesdits premiers moyens d'enroulement (1) à travers ledit accessoire de déviation (10) et elle s'étend en outre jusqu'auxdits seconds moyens d'enroulement (21) à travers ladite languette (12), et ladite ceinture de sécurité (3) forme une partie de ceinture épaulière (3a) du côté desdits premiers moyens d'enroulement (1) avant ladite languette(12) et une partie de ceinture abdominale (3b) du côté desdits seconds moyens d'enroulement (21) après ladite languette (12) quand ladite languette (12) est verrouillée dans ladite boucle (14) de sorte que ladite ceinture de sécurité (3) est portée, et
lesdits premiers moyens d'enroulement (1) et lesdits seconds moyens d'enroulement (21) sont adaptés pour fonctionner de telle sorte que suite à la libération de ladite languette (12) par rapport à ladite boucle (14), c'est-à-dire suite au déverrouillage de la boucle, ladite partie de ceinture abdominale (3b) de ladite ceinture de sécurité (3) est enroulée e'n premier lieu, puis ladite partie de ceinture épaulière (3a) de ladite ceinture de sécurité (3) est enroulée en second lieu, dans lequel
lesdits premiers moyens d'enroulement (1) comprennent un premier ressort de rappel (6) et un moteur électrique (7) pour appliquer une force d'enroulement à une première bobine (5) pour enrouler ladite ceinture de sécurité (3),
lesdits seconds moyens d'enroulement (21) comprennent un second ressort de rappel (2.6) pour appliquer une force d'enroulement à une seconde bobine (25) pour enrouler ladite ceinture de sécurité (3),
la force d'enroulement appliquée à ladite ceinture de sécurité (3) par ledit second ressort de rappel (26) est établie de sorte à être supérieure à la force d'enroulement appliquée par ledit premier ressort de rappel (6) et de sorte à être inférieure à la force d'enroulement formée par la somme de la force d'enroulement appliquée par ledit premier ressort de rappel (6) et la force d'enroulement appliquée par ledit moteur électrique (7) quand il est actionné, et
ladite partie de ceinture abdominale (3b) est enroulée sur ladite seconde bobine (25) desdits seconds moyens d'enroulement (21) en commandant ledit moteur électrique (7) desdits premiers moyens d'enroulement (1) de manière à ce qu'il ne soit pas actionné, tandis que ladite partie de ceinture épaulière (3a) est enroulée sur ladite première bobine (5) desdits premiers moyens d'enroulement (1) en commandant ledit moteur électrique (7) desdits premiers moyens d'enroulement (1) de manière à ce qu'il soit actionné.

2. Dispositif de ceinture de sécurité, comprenant :
◆ une ceinture de sécurité (3) qui peut être portée par un occupant de véhicule ;
◆ de premiers moyens d'enroulement (1) pour enrouler ladite ceinture de sécurité (3) à partir d'un côté d'extrémité de celle-ci ;
◆ de seconds moyens d'enroulement (21) qui sont disposés dans une zone à proximité de la hanche d'un occupant côté portière pour enrouler ladite ceinture de sécurité (3) à partir de l'autre extrémité de celle-ci ;
◆ un accessoire de déviation (10) pour retenir ladite ceinture de sécurité (3) sur une zone à proximité de l'épaule d'un occupant ;
◆ une languette (12) fixée à ladite ceinture de sécurité ; et
◆ une boucle (14) dans laquelle ladite languette (12) peut être verrouillée et qui est disposée dans une zone à proximité de la hanche d'un occupant côté habitacle ;
dans lequel ladite ceinture de sécurité (3) s'étend depuis lesdits premiers moyens d'enroulement (1) à travers ledit accessoire de déviation (10) et elle s'étend en outre jusqu'auxdits seconds moyens d'enroulement (21) à travers ladite languette (12), et ladite ceinture de sécurité (3) forme une partie de ceinture épaulière (3a) du côté desdits premiers moyens d'enroulement (1) avant ladite languette(12) et une partie de ceinture abdominale (3b) du côté desdits seconds moyens d'enroulement (21) après ladite languette (12) quand ladite languette (12) est verrouillée dans ladite boucle (14) de sorte que ladite ceinture de sécurité (3) est portée, et
lesdits premiers moyens d'enroulement (1) et lesdits seconds moyens d'enroulement (21) sont adaptés pour fonctionner de telle sorte que suite à la libération de ladite languette (12) par rapport à ladite boucle (14), c'est-à-dire suite au déverrouillage de la boucle, ladite partie de ceinture abdominale (3b) de ladite ceinture de sécurité (3) est enroulée en premier lieu, puis ladite partie de ceinture épaulière (3a) de ladite ceinture de sécurité (3) est enroulée en second lieu, dans lequel
lesdits premiers moyens d'enroulement (1) comprennent un premier ressort de rappel (6) pour appliquer une force d'enroulement à une première bobine (5) pour enrouler ladite ceinture de sécurité (3),
lesdits seconds moyens d'enroulement (21) comprennent un second ressort de rappel (26) et un moteur électrique (27) pour appliquer une force d'enroulement à une seconde bobine (25) pour enrouler ladite ceinture de sécurité,
la force d'enroulement appliquée à ladite ceinture de sécurité (3) par ledit premier ressort de rappel (6) est établie de sorte à être supérieure à la force d'enroulement appliquée par ledit second ressort de rappel (26) et de sorte à être inférieure à la force d'enroulement formée par la somme de la force d'enroulement appliquée par ledit second ressort de rappel (26) et la force d'enroulement appliquée par ledit moteur électrique (27) quand il est actionné, et
ladite partie de ceinture abdominale (3b) est enroulée sur ladite seconde bobine (25) desdits seconds moyens d'enroulement (21) en commandant ledit moteur électrique (27) desdits seconds moyens d'enroulement (21) de manière à ce qu'il
soit actionné, tandis que ladite partie de ceinture épaulière (3a) est enroulée sur ladite première bobine (5) desdits premiers moyens d'enroulement (1) en commandant ledit moteur électrique (27) desdits seconds moyens d'enroulement (21) de manière à ce qu'il ne soit pas actionné.

3. Dispositif de ceinture de sécurité, comprenant :
◆ une ceinture de sécurité (3) qui peut être portée par un occupant de véhicule ;
◆ de premiers moyens d'enroulement (1) pour enrouler ladite ceinture de sécurité (3) à partir d'un côté d'extrémité de celle-ci ;
◆ de seconds moyens d'enroulement (21) qui sont disposés dans une zone à proximité de la hanche d'un occupant côté portière pour enrouler ladite ceinture de sécurité (3) à partir de l'autre extrémité de celle-ci ;
◆ un accessoire de déviation (10) pour retenir ladite ceinture de sécurité (3) sur une zone à proximité de l'épaule d'un occupant ;
◆ une languette (12) fixée à ladite ceinture de sécurité ; et
◆ une boucle (14) dans laquelle ladite languette (12) peut être verrouillée et qui est disposée dans une zone à proximité de la hanche d'un occupant côté habitacle ;
dans lequel ladite ceinture de sécurité (3) s'étend depuis lesdits premiers moyens d'enroulement (1) à travers ledit accessoire de déviation (10) et elle s'étend en outre jusqu'auxdits seconds moyens d'enroulement (21) à travers ladite languette (12), et ladite ceinture de sécurité (3) forme une partie de ceinture épaulière (3a) du côté desdits premiers moyens d'enroulement (1) avant ladite languette(12) et une partie de ceinture abdominale (3b) du côté desdits seconds moyens d'enroulement (21) après ladite languette (12) quand ladite languette (12) est verrouillée dans ladite boucle (14) de sorte que ladite ceinture de sécurité (3) est portée, et lesdits premiers moyens d'enroulement (1) et lesdits seconds moyens d'enroulement (21) sont adaptés pour fonctionner de telle sorte que suite à la libération de ladite languette (12) par rapport à ladite boucle (14), c'est-à-dire suite au déverrouillage de la boucle, ladite partie de ceinture abdominale (3b) de ladite ceinture de sécurité (3) est enroulée en premier lieu, puis ladite partie de ceinture épaulière (3a) de ladite ceinture de sécurité (3) est enroulée en second lieu, dans lequel
lesdits premiers moyens d'enroulement (1) comprennent un moteur électrique (7) pour appliquer une force d'enroulement à une première bobine (5) pour enrouler ladite ceinture de sécurité (3),
lesdits seconds moyens d'enroulement (21) comprennent un ressort de rappel (26) pour appliquer une force d'enroulement à une seconde bobine (25) pour enrouler ladite ceinture de sécurité (3),
la force d'enroulement appliquée à ladite ceinture de sécurité (3) par ledit ressort de rappel (26) est établie de sorte à être supérieure à la force d'enroulement appliquée par ledit moteur électrique (7) quand il n'est pas entraîné et de sorte à être inférieure à la force d'enroulement appliquée par ledit moteur électrique (7) quand il est actionné, et
ladite partie de ceinture abdominale (3b) est enroulée sur ladite seconde bobine (25) desdits seconds moyens d'enroulement (21) en commandant ledit moteur électrique (7) desdits premiers moyens d'enroulement (1) de manière à ce qu'il ne soit pas actionné, tandis que ladite partie de ceinture épaulière (3a) est enroulée sur ladite première bobine (5) desdits premiers moyens d'enroulement (1) en commandant ledit moteur électrique (7) desdits premiers moyens d'enroulement (1) de manière à ce qu'il soit actionné.

4. Véhicule, comprenant un système de marche comprenant un moteur ; un système électrique ; un dispositif de commande d'entraînement (30) pour effectuer la commande d'entraînement dudit système de marche et dudit système électrique ; et un dispositif de ceinture de sécurité conçu pour retenir un occupant de véhicule en cas de collision du véhicule, dans lequel ledit dispositif de ceinture de sécurité (100, 200, 300, 400) est un dispositif de ceinture de sécurité selon l'une quelconque des revendications 1 à 3.
